(19) Europäisches Patentamt
European Patent Office
Office européen des brevets

(11) **EP 4 635 643 A1**

(12) **EUROPEAN PATENT APPLICATION**

(43) Date of publication:
**22.10.2025 Bulletin 2025/43**

(21) Application number: **25162050.6**

(22) Date of filing: **06.03.2025**

(51) International Patent Classification (IPC):
**B21C 1/34** *(2006.01)*  **B21C 51/00** *(2006.01)*
**G01B 11/00** *(2006.01)*  **G01B 11/24** *(2006.01)*
**G01B 11/26** *(2006.01)*

(52) Cooperative Patent Classification (CPC):
**B21C 1/34; B21C 51/00; G01B 11/002;
G01B 11/2433; G01B 11/26**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.03.2024 JP 2024038019**

(71) Applicant: **Proterial, Ltd.
Tokyo 135-0061 (JP)**

(72) Inventors:
• **NISHI, Hajime
  Tokyo 135-0061 (JP)**
• **MURAKAMI, Yuri
  Tokyo 135-0061 (JP)**
• **HONDA, Yuki
  Tokyo 135-0061 (JP)**

(74) Representative: **Barker Brettell LLP
100 Hagley Road
Edgbaston
Birmingham B16 8QQ (GB)**

(54) **ENTRY ANGLE ENLARGEMENT INHIBITING DEVICE AND METHOD OF MANUFACTURING ENAMELED WIRE**

(57) Provided herein are an entry angle enlargement inhibiting device (33) and a method of manufacturing an enameled wire that can reduce abnormalities in an external appearance of an enamel film. The enameled wire manufacturing system (1) includes a mechanism (11) of letting a rolled conductor (23A) or a rectangular conductor (23B) pass through a rectangular drawing die (31). The entry angle enlargement inhibiting device (33) includes a measurer (37) and an adjuster (39). In the enameled wire manufacturing system (1), the measurer (37) measures a pitch angle, a yaw angle, and a roll angle of the rolled conductor (23A) or the rectangular conductor (23B) with respect to the rectangular drawing die (31). The adjuster (39) moves or rotates the rolled conductor (23A) or the rectangular conductor (23B) upstream of the rectangular drawing die (31) in a direction where the pitch angle, the yaw angle, and the roll angle measured by the measurer (37) decrease.

FIG. 1

EP 4 635 643 A1

**Description**

BACKGROUND

The present disclosure relates to an entry angle enlargement inhibiting device and a method of manufacturing an enameled wire.

An enameled wire includes a conductor and an enamel film. The conductor is mainly made of copper. The enamel film covers the surface of the conductor. Japanese Patent No. 6730930 and Japanese Unexamined Patent Application Publication 2015-36149 disclose a method of manufacturing an enameled wire. In the method of manufacturing an enameled wire, a coating material is applied on the surface of the conductor to form a coating film. The coating material contains polyimide, polyamide-imide, and the like. The coating material is then baked to obtain an enamel film.

SUMMARY

A rectangular enameled wire is a type of the enameled wire. The conductor of the rectangular enameled wire is a rectangular conductor. The rectangular conductor is a conductor having a rectangular transverse cross section. The rectangular conductor can be obtained by performing round wire drawing, rolling, and rectangular wire drawing on a steel material called a wire rod. The conductor obtained after the rolling is called a rolled conductor.

The rectangular drawing is a step of letting the rolled conductor or the rectangular conductor pass through a rectangular drawing die which has a rectangular-shaped drawing hole. If an entry angle of the conductor with respect to the drawing die is large, friction between the drawing die and the conductor on their boundary surface becomes large. If the friction is large, the conductor is abraded by the drawing die, which increases the amount of copper powder generated. If the amount of the copper powder generated increases, the amount of the copper powder adhered to the surface of the conductor increases. If the coating material is applied on the surface of the conductor when a large amount of the copper powder is adhered to the surface of the conductor, micro bubbles are easily formed in the coating film. If the coating film is baked with the microbubbles present in the coating film, the micro bubbles foam to cause an abnormality in the external appearance of the enamel film.

In one aspect of the present disclosure, it is preferable to provide an entry angle enlargement inhibiting device that can reduce abnormalities in an external appearance of an enamel film, and a method of manufacturing an enameled wire.

One aspect of the present disclosure is an entry angle enlargement inhibiting device used in an enameled wire manufacturing system that includes a mechanism of letting a rolled conductor or a rectangular conductor pass through a rectangular drawing die. The entry angle enlargement inhibiting device includes a measurer configured to measure a pitch angle, a yaw angle, and a roll angle of the rolled conductor or the rectangular conductor with respect to the rectangular drawing die; and an adjuster configured to move or rotate the rolled conductor or the rectangular conductor upstream of the rectangular drawing die in a direction where the pitch angle, the yaw angle, and the roll angle measured by the measurer decrease.

The entry angle enlargement inhibiting device, which is one aspect of the present disclosure, can reduce abnormalities in the external appearance of the enamel film.

Another aspect of the present disclosure is a method of manufacturing an enameled wire that includes letting a rolled conductor or a rectangular conductor pass through a rectangular drawing die. The method of manufacturing an enameled wire includes measuring a pitch angle, a yaw angle, and a roll angle of the rolled conductor or the rectangular conductor with respect to the rectangular drawing die; and moving or rotating the rolled conductor or the rectangular conductor upstream of the rectangular drawing die in a direction where the pitch angle, the yaw angle, and the roll angle measured decrease.

According to the method of manufacturing an enameled wire, which is another aspect of the present disclosure, abnormalities in the external appearance of the enamel film can be reduced. The method of manufacturing can be carried out using the entry angle enlargement inhibiting device described in the present disclosure.

BRIEF DESCRIPTION OF THE DRAWINGS

An example embodiment of the present disclosure will be described hereinafter with reference to the accompanying drawings, in which:

FIG. 1 is an explanatory drawing showing a configuration of an enameled wire manufacturing system;
FIG. 2 is a cross sectional view showing a transverse cross sectional shape of a rolled conductor;
FIG. 3 is a cross sectional view showing a transverse cross sectional shape of a rectangular conductor;
FIG. 4 is an explanatory drawing showing a configuration of a rectangular drawing device;
FIG. 5 is an explanatory drawing showing a pitch angle;
FIG. 6 is an explanatory drawing showing a yaw angle;
FIG. 7 is an explanatory drawing showing a roll angle and a method of measuring the roll angle;
FIG. 8 is an explanatory drawing showing a method of measuring the pitch angle; and
FIG. 9 is an explanatory drawing showing a method of measuring the yaw angle.

DETAILED DESCRIPTION OF EXEMPLARY EMBODIMENTS

<First Embodiment>

1. Overall Configuration of Enameled Wire Manufacturing System 1

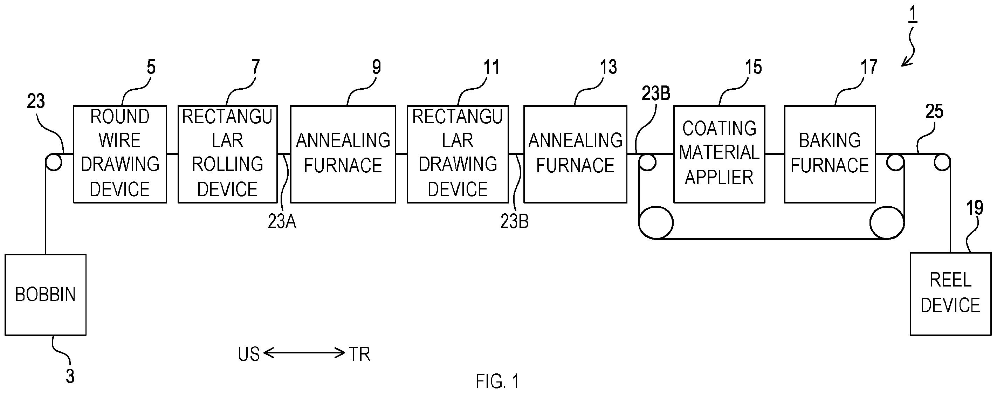

An overall configuration of an enameled wire manufacturing system 1 will be explained with reference to FIG. 1 to FIG. 3. As shown in FIG. 1, the enameled wire manufacturing system 1 includes a bobbin 3, a round wire drawing device 5, a rectangular rolling device 7, an annealing furnace 9, a rectangular drawing device 11, an annealing furnace 13, a coating material applier 15, a baking furnace 17, and a reel device 19.

A linear conductor 23 is wound around the bobbin 3. The conductor 23 is pulled out from the bobbin 3, travels along a path passing through the round wire drawing device 5, the rectangular rolling device 7, the annealing furnace 9, the rectangular drawing device 11, the annealing furnace 13, the coating material applier 15, and the baking furnace 17 in this order, and is wound by the reel device 19. Note that the conductor 23 passes through a section including the coating material applier 15 and the baking furnace 17 two or more times.

The material for the conductor 23 is copper or copper alloy, for example. The transverse cross sectional shape of the conductor 23 is round until the rectangular rolling, which will be mentioned later. The transverse cross section of the conductor 23 is a cross section taken orthogonally to longitudinal directions of the conductor 23.

The round wire drawing device 5 draws the conductor 23 that has a round transverse cross sectional shape. The rectangular rolling device 7 performs the rectangular rolling on the conductor 23 that travels through the rectangular rolling device 7. The conductor 23 that underwent the rectangular rolling is now called a rolled conductor 23A.

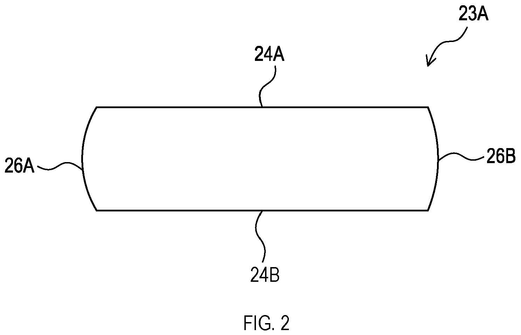

As shown in FIG. 2, the transverse cross-sectional shape of the rolled conductor 23A has two sides 24A and 24B that are parallel to each other as well as two sides 26A and 26B each forming an arc. In the transverse cross section, the side 24A and the side 24B are straight lines. In the transverse cross section, the lengths of the sides 24A and 24B are greater than the lengths of the sides 26A and 26B. The rolled conductor 23A is annealed in the annealing furnace 9.

The rectangular drawing device 11 performs the rectangular drawing on the rolled conductor 23A that travels through the rectangular drawing device 11. The rectangular drawing is a step of drawing the rolled conductor 23A. The conductor 23 that underwent the rectangular drawing is now called a rectangular conductor 23B. A configuration of the rectangular drawing device 11 will be explained later.

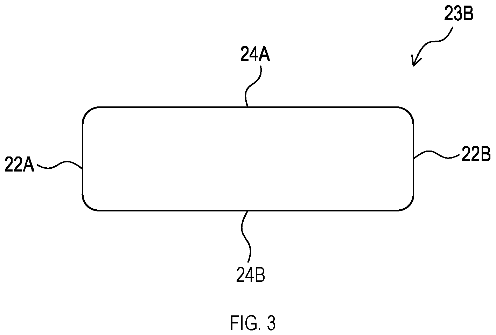

As shown in FIG. 3, the transverse cross-sectional shape of the rectangular conductor 23B is rectangular. The longer sides of the rectangular are the sides 24A and 24B. The shorter sides of the rectangular are sides 22A and 22B, which respectively result from the sides 26A and 26B of the rolled conductor 23A.

As shown in FIG. 1, the direction in which the conductor 23 travels in the rectangular drawing device 11 is a traveling direction TR. The direction opposite from the traveling direction TR is an upstream direction US. The rectangular conductor 23B is annealed in the annealing furnace 13. The coating material applier 15 applies an enamel coating on the surface of the rectangular conductor 23B to form a coating of an enamel coating material of a given thickness on the surface of the rectangular conductor 23B.

The baking furnace 17 heats the traveling rectangular conductor 23B, coated with the enamel coating material of a given thickness by the coating material applier, 15 to form a film. As shown in FIG. 1, application of the enamel coating material by the coating material applier 15 and forming of the film in the baking furnace 17 are repeated. As a result, an enameled wire 25 having a given film thickness is manufactured. The enameled wire 25 is then wound by the reel device 19.

A method of forming the film is as follows, for example. A coating material for enameled wire is applied on the surface of the rectangular conductor 23B. The coating material for enameled wire contains, for example, resin and a solvent. Then, the solvent in the coating material applied on the surface of the rectangular conductor 23B is vaporized, and the resin in the coating material is cured. The enameled wire 25 is obtained as a result of the vaporization of the solvent and the curing of the resin.

2. Configuration of Rectangular Drawing Device 11

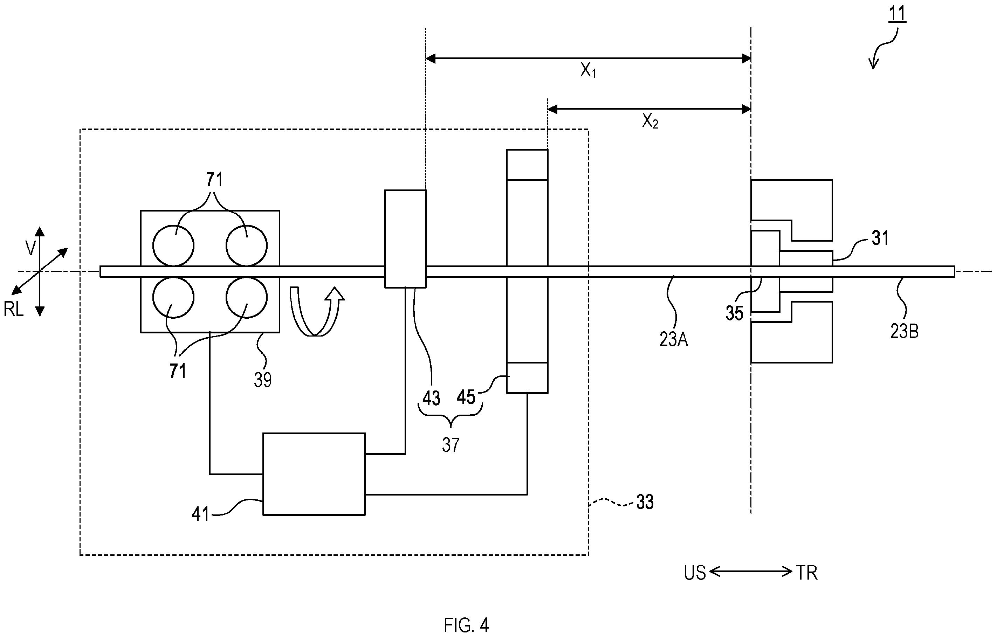

A configuration of the rectangular drawing device 11 will be explained with reference to FIG. 4 to FIG. 9. As shown in FIG. 4, the rectangular drawing device 11 includes a rectangular drawing die 31, and an entry angle enlargement inhibiting device 33.

The rectangular drawing die 31 includes a rectangular drawing hole 35. The conductor 23 passes the drawing hole 35 as it travels in the traveling direction TR. The conductor 23 is the rolled conductor 23A before passing through the drawing hole 35. The conductor 23 becomes the rectangular conductor 23B after passing through the drawing hole 35. The rectangular drawing device 11 corresponds to a mechanism to let the rolled conductor 23A pass through the rectangular drawing die 31.

The entry angle enlargement inhibiting device 33 includes a measurer 37, an adjuster 39, and a controller 41. The measurer 37 can measure a pitch angle $\theta$, a yaw angle $\delta$, and a roll angle $\gamma$. The pitch angle $\theta$, the yaw angle $\delta$, and the roll angle $\gamma$ correspond to entry angles.

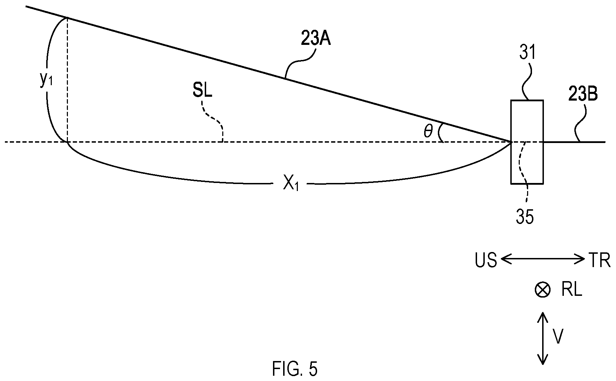

The pitch angle $\theta$ will be explained with reference to FIG. 5. FIG. 5 shows the conductor 23 and the rectangular drawing die 31 as viewed in a direction orthogonal to the traveling direction TR and horizontal (hereinafter referred to as a right-left direction RL). A reference line SL is a straight line that matches with an axis of the drawing hole 35. In FIG. 5, the pitch angle $\theta$ is an angle formed by the reference line SL and the rolled conductor 23A situated upstream of the rectangular drawing die 31.

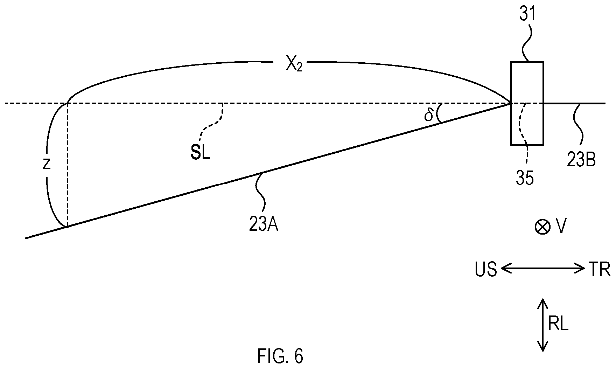

The yaw angle $\delta$ will be explained with reference to FIG. 6. FIG. 6 shows the conductor 23 and the rectangular drawing die 31 as viewed in a vertical direction V. The vertical direction V is a direction orthogonal to the horizontal plane. The vertical direction V is orthogonal to the right-left direction RL. In FIG. 6, the yaw angle $\delta$ is an angle formed by the reference line SL and the rolled conductor 23A situated upstream of the rectangular drawing die 31.

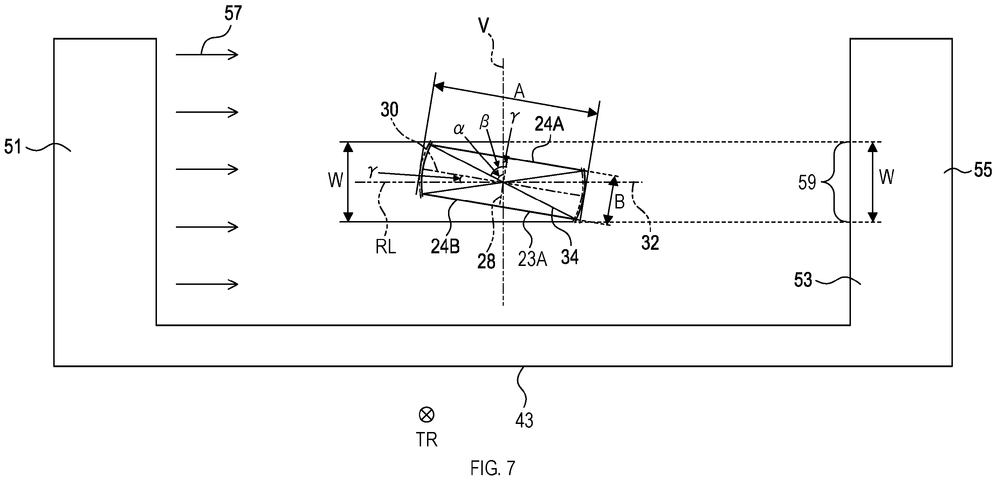

The roll angle $\gamma$ will be explained with reference to FIG. 7. FIG. 7 shows a transverse cross section of the rolled conductor 23A taken orthogonally to the right-left direction RL and the vertical direction V as viewed from a point located upstream of the rectangular drawing die 31. In FIG. 7, the roll angle $\gamma$ is an angle formed by the vertical direction V and a perpendicular line 28 perpendicular to the sides 24A and 24B. The roll angle $\gamma$ is also an angle formed by the right-left direction RL and a parallel line 30 parallel to the sides 24A and 24B. The roll angle $\gamma$ is an acute angle.

As shown in FIG. 4, the measurer 37 includes a first measurement portion 43 and a second measurement portion 45. The first measurement portion 43 measures the pitch angle $\theta$ and the roll angle $\gamma$.

The first measurement portion 43 is disposed upstream of the rectangular drawing die 31. The distance from the rectangular drawing die 31 to the first measurement portion 43 is a first distance $X_1$. The first distance $X_1$ is the distance in the upstream direction US. The location of the first measurement portion 43 corresponds to a first measurement position. As the first measurement portion 43 and the second measurement portion 45, a high-speed 2D optical micrometer TM-3000 series of Keyence Corporation can be used, for example.

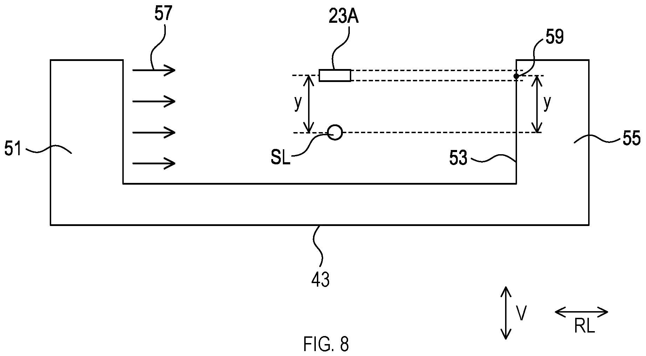

As shown in FIG. 8, the first measurement portion 43 includes a first irradiator 51, a first light receiver 53, and a first detector 55. The first irradiator 51 irradiates the first light receiver 53 with parallel light 57. The direction of irradiation (irradiation direction) of the parallel light 57 is parallel to the right-left direction RL and orthogonal to the vertical direction V. The irradiation direction of the parallel light 57 is horizontal.

The first light receiver 53 is disposed away from the first irradiator 51 in the right-left direction RL. The first light receiver 53 receives the parallel light 57 on a receiving surface having a given area. The rolled conductor 23A is interposed between the first irradiator 51 and the first light receiver 53. In other words, the first light receiver 53 is disposed so as to interpose the rolled conductor 23A between the light receiver 53 and the first irradiator 51. The first detector 55 calculates the pitch angle $\theta$ and the roll angle $\gamma$ based on the parallel light 57 received by the first light receiver 53, which will be explained later in detail.

The second measurement portion 45 measures the yaw angle $\delta$. As shown in FIG. 4, the second measurement portion 45 is disposed upstream of the rectangular drawing die 31. The distance from the rectangular drawing die 31 to the second measurement portion 45 is a second distance $X_2$. The second distance $X_2$ is the distance in the upstream direction US. In the present embodiment, the second distance $X_2$ is smaller than the first distance $X_1$. The second distance $X_2$ may be greater than the first distance $X_1$. The location of the second measurement portion 45 corresponds to a second measurement position.

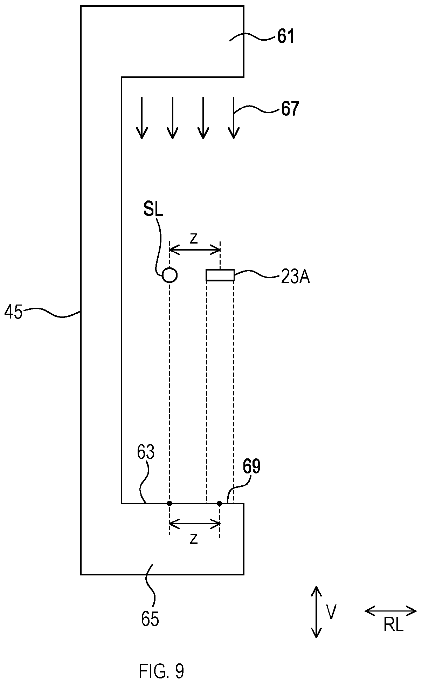

As shown in FIG. 9, the second measurement portion 45 includes a second irradiator 61, a second light receiver 63, and a second detector 65. The configurations of the second irradiator 61, the second light receiver 63, and the second detector 65 are basically the same as those of the first irradiator 51, the first light receiver 53, and the first detector 55.

However, as shown in FIG. 9, the second irradiator 61 is aligned with the second light receiver 63 in the vertical direction V. The irradiation direction of parallel light 67 is parallel to the vertical direction V and orthogonal to the right-left direction RL. The rolled conductor 23A is interposed between the second irradiator 61 and the second light receiver 63. In other words, the second light receiver 63 is disposed so as to interpose the rolled conductor 23A between the second light receiver 63 and the second irradiator 61. The second detector 65 calculates the yaw angle $\delta$ based on the parallel light 67 received by the second light receiver 63, which will be explained later in detail.

As shown in FIG. 4, the adjuster 39 is disposed upstream of the measurer 37. The adjuster 39 includes rollers 71 and contacts the rolled conductor 23A via the rollers 71. The rolled conductor 23A passes through a point interposed between the rollers 71.

The adjuster 39 can move both in the vertical direction V and the right-left direction RL. If the adjuster 39 moves, the position of the rolled conductor 23A when passing through the adjuster 39 moves. If the position of the rolled conductor 23A when passing through the adjuster 39 moves, the pitch angle $\theta$ or the yaw angle $\delta$ changes. For example, if the adjuster 39 moves in the vertical direction V, the pitch angle $\theta$ changes. If the adjuster 39 moves in the right-left direction RL, the yaw angle $\delta$ changes.

The adjuster 39 is rotatable in both directions about a rotational shaft that lies in the traveling direction TR. If the adjuster 39 rotates, the roll angle $\gamma$ changes.

The controller 41 obtains the pitch angle $\theta$, the roll angle $\gamma$, and the yaw angle $\delta$ from the measurer 37.

The controller 41 commands the adjuster 39 to move or to rotate. The adjuster 39 moves or rotates in response to the command. The direction and amount of the movement or rotation of the adjuster 39 are the direction and amount of decrease of the pitch angle $\theta$, the roll angle $\gamma$, or the yaw angle $\delta$.

The enameled wire manufacturing system 1 can be used to implement a method of manufacturing an enameled wire. The method of manufacturing an enameled wire includes a step of letting the rolled conductor 23A pass through the rectangular drawing die 31. The method of manufacturing an enameled wire also includes a step of measuring the pitch angle $\theta$, the yaw angle $\delta$, and the roll angle $\gamma$. The method of manufacturing an enameled wire also includes a step of moving or rotating the rolled conductor 23A upstream of the rectangular drawing die 31 in a direction where the pitch angle $\theta$, the yaw angle $\delta$, and the roll angle $\gamma$ measured decrease.

3. Process of Calculating Entry Angle

(3-1) Measurement of Pitch Angle $\theta$

The first measurement portion 43 measures the pitch angle as described below. As shown in FIG. 8, the first detector 55 detects a distance y of the rolled conductor 23A in the vertical direction V based on the parallel light 57 received by the first light receiver 53. The distance y is a distance between the rolled conductor 23A and the reference line SL in the vertical direction V. As shown in FIG. 5, the distance y is measured at a location whose distance from the rectangular drawing die 31 is the first distance $X_1$.

The principle of the detection of the distance y is as follows. Basically, the first light receiver 53 receives the parallel light 57 on its entire surface. However, a shadow 59 appears on the first light receiver 53 because the parallel light 57 is interrupted by the rolled conductor 23A. The first detector 55 detects the location of the shadow 59 in the vertical direction V.

In the vertical direction V, the location of the shadow 59 is equal to the location of the rolled conductor 23A. Thus, the first detector 55 calculates the distance between the shadow 59 and the reference line SL in the vertical direction V and takes this distance as the distance $y_2$. For example, the distance between the center of the shadow 59 and the reference line SL is calculated when calculating the distance between the shadow 59 and the reference line SL.

As shown in FIG. 5, the following formula (1) is satisfied with respect to the distance y and the first distance $X_1$.

$$\text{Formula (1): } \tan\theta = y/X_1$$

The first detector 55 calculates the pitch angle $\theta$ by substituting the distance y and the first distance $X_1$ into the formula (1).

(3-2) Measurement of Yaw Angle $\delta$

The second measurement portion 45 measures the yaw angle $\delta$ as described below. As shown in FIG. 9, the second detector 65 detects a distance z of the rolled conductor 23A in the right-left direction RL based on the parallel light 67 received by the second light receiver 63. The distance z is a distance between the rolled conductor 23A and the reference line SL in the right-left direction RL. As shown in FIG. 6, the distance z is measured at a location whose distance from the rectangular drawing die 31 is the second distance $X_2$. The distance z corresponds to a horizontal location.

The principle of the detection of the distance z is as follows. Basically, the second light receiver 63 receives the parallel light 67 on its entire surface. However, a shadow 69 appears on the second light receiver 63 because the parallel light 67 is interrupted by the rolled conductor 23A. The second detector 65 detects the location of the shadow 69 in the right-left direction RL.

In the right-left direction RL, the location of the shadow 69 is equal to the location of the rolled conductor 23A. Thus, the second detector 65 calculates the distance between the shadow 69 and the reference line SL in the right-left direction RL and takes this distance as the distance z. For example, the distance between the center of the shadow 69 and the reference line SL is calculated when calculating the distance between the shadow 69 and the reference line SL.

As shown in FIG. 6, the following formula (2) is satisfied with respect to the distance z and the second distance $X_2$.

$$\text{Formula (2): } \tan\delta = z/X_2$$

The second detector 65 calculates the yaw angle $\delta$ by substituting the distance z and the second distance $X_2$ into the formula (2).

(3-3) Measurement of Roll Angle $\gamma$

The first measurement portion 43 measures the roll angle $\gamma$ as described below. In FIG. 7, the thickness W is an apparent thickness of the rolled conductor 23A as viewed in the irradiation direction of the parallel light 57. The irradiation direction of the parallel light 57 is orthogonal to the traveling direction TR of the rolled conductor 23A. In the present embodiment, the irradiation direction of the parallel light 57 is parallel to the right-left direction RL and orthogonal to the vertical direction V.

As shown in FIG. 7, the thickness W is equal to the length of the shadow 59 in the vertical direction V. The first detector 55 calculates the length of the shadow 59 in the vertical direction V and takes this length as the thickness W.

The following formulas (3) to (5) are satisfied with respect to the lengths and angles of the configuration shown in FIG. 7.

$$\text{Formula (3): } \cos\alpha = W/A$$

$$\text{Formula (4): } \cos\beta = B/A$$

$$\text{Formula (5): } \alpha = \beta - \gamma$$

In FIG. 7, $\alpha$ is an angle formed by a diagonal line 34 of the rolled conductor 23A and the vertical direction V, and $\beta$ is an angle formed by the perpendicular line 28 and the diagonal line 34. In FIG. 7, A is the width of the rolled conductor 23A in a direction parallel to the sides 24A and 24B, and B is the thickness of the rolled conductor 23A in a direction orthogonal to the sides 24A and 24B, where A is greater than B.

Formula (6) can be obtained from the formulas (3) to (5).

$$\text{Formula (6): } \gamma = \cos^{-1}(B/A) - \cos^{-1}(W/A)$$

The first detector 55 calculates the roll angle $\gamma$ by substituting the thickness W obtained as mentioned above and known values A and B into the formula (6).

4. Effects of Entry Angle Enlargement Inhibiting Device 33

(1A) The entry angle enlargement inhibiting device 33 can measure the pitch angle $\theta$, the yaw angle $\delta$, and the roll angle $\gamma$. The entry angle enlargement inhibiting device 33 can move or rotate the rolled conductor 23A in the adjuster 39 in a direction where the pitch angle $\theta$, the yaw angle $\delta$, and the roll angle $\gamma$ measured decrease.

This reduces friction between the rectangular drawing die 31 and the rolled conductor 23A on their boundary surface. If the friction is small, abrasion of the rolled conductor 23A by the rectangular drawing die 31 can be reduced, which decreases the amount of copper powder generated. If the amount of copper powder generated is reduced, the amount of the copper powder adhered to the surface of the conductor 23 is reduced. If the amount of the copper powder adhered to the surface of the conductor 23 is small, micro bubbles are not easily formed in the coating film when the coating material is applied on the surface of the conductor 23. If the micro bubbles are not easily formed in the coating film, the micro bubbles are also not easily formed when the coating film is baked. As a result, abnormalities are not easily caused in the external appearance of the enamel film.

(1B) The entry angle enlargement inhibiting device 33 is situated upstream of the rectangular drawing die 31 and measures the distance y at the first measurement position whose distance from the rectangular drawing die 31 is the first distance $X_1$. The entry angle enlargement inhibiting device 33 then calculates the pitch angle $\theta$ based on the distance y and the first distance $X_1$. Accordingly, the pitch angle $\theta$ can be measured with further accuracy.

The entry angle enlargement inhibiting device 33 is situated upstream of the rectangular drawing die 31 and measures the distance z at the second measurement position whose distance from the rectangular drawing die 31 is the second distance $X_2$. The entry angle enlargement inhibiting device 33 then calculates the yaw angle $\delta$ based on the distance z and the second distance $X_2$. Accordingly, the yaw angle $\delta$ can be measured with further accuracy.

(1C) The entry angle enlargement inhibiting device 33 detects the distance y by using the first measurement portion 43. Accordingly, the distance y can be detected with further accuracy. The entry angle enlargement inhibiting device 33 detects the distance z by using the second measurement portion 45. Accordingly, the distance z can be detected with further accuracy.

(1D) The entry angle enlargement inhibiting device 33 measures the apparent thickness W of the rolled conductor 23A as viewed in a direction orthogonal to the traveling direction TR and calculates the roll angle $\gamma$ based on the apparent thickness W. Accordingly, the roll angle $\gamma$ can be calculated with further accuracy.

(1E) The entry angle enlargement inhibiting device 33 calculates the apparent thickness W by using the first measurement portion 43. Accordingly, the apparent thickness W can be calculated with further accuracy.

<Other Embodiments>

Although the embodiment of the present disclosure has been explained above, the present disclosure should not be limited to the aforementioned embodiment and may be implemented in various modifications.

(1) The entry angle enlargement inhibiting device 33 does not have to include the controller 41. For example, an operator can provide the adjuster 39 with a command to move or rotate depending on the measured values of the pitch angle $\theta$, the roll angle $\gamma$, and the yaw angle $\delta$.

(2) The conductor 23 that enters the rectangular drawing die 31 may be the rectangular conductor 23B. This modification also renders the same effects.

(3) The device that measures the pitch angle $\theta$ may be different from the device that measures the roll angle $\gamma$.

(4) The device that measures a part of or all of the pitch angle θ, the roll angle γ, and the yaw angle δ may be different from the first measurement portion 43 and the second measurement portion 45. For example, a part of or all of the pitch angle θ, the roll angle γ, and the yaw angle δ may be measured by using a laser displacement meter.

(5) Functions of one element in the aforementioned embodiments may be distributed to two or more elements. Functions of two or more elements may be integrated into one element. A part of the configuration of the aforementioned embodiments may be omitted. At least a part of the configuration of the aforementioned embodiments may be added to or replaced with other configuration of the aforementioned embodiments.

(6) Other than the entry angle enlargement inhibiting device 33 described above, the present disclosure can also be implemented in various forms, such as a rectangular enameled wire manufacturing system, a method of manufacturing a rectangular enameled wire, and a method of adjusting entry angle of a conductor.

**Claims**

1. An entry angle enlargement inhibiting device (33) used in an enameled wire manufacturing system (1) that includes a mechanism (11) of letting a rolled conductor (23A) or a rectangular conductor (23B) pass through a rectangular drawing die (31), the device comprising:

   a measurer (37) configured to measure a pitch angle, a yaw angle, and a roll angle of the rolled conductor (23A) or the rectangular conductor (23B) with respect to the rectangular drawing die (31); and
   an adjuster (39) configured to move or rotate the rolled conductor (23A) or the rectangular conductor (23B) upstream of the rectangular drawing die (31) in a direction where the pitch angle, the yaw angle, and the roll angle measured by the measurer (37) decrease.

2. The entry angle enlargement inhibiting device (33) according to claim 1, wherein the measurer (37) is situated upstream of the rectangular drawing die (31) in an upstream direction, and configured to measure a vertical distance from the rolled conductor (23A) or the rectangular conductor (23B) to a reference line at a first measurement position whose distance from the rectangular drawing die (31) is a first distance and calculate the pitch angle based on the vertical distance and the first distance, and wherein the measurer (37) is situated upstream of the rectangular drawing die (31) in the upstream direction, and configured to measure a horizontal distance from the rolled conductor (23A) or the rectangular conductor (23B) to the reference line at a second measurement position whose distance from the rectangular drawing die (31) is a second distance and calculate the yaw angle based on the horizontal distance and the second distance.

3. The entry angle enlargement inhibiting device (33) according to claim 2,

   wherein the measurer (37) comprises

      a first measurement portion (43) disposed at the first measurement position; and
      a second measurement portion (45) disposed at the second measurement position,

   wherein the first measurement portion (43) comprises

      a first irradiator (51) configured to irradiate parallel light in a horizontal direction;
      a first light receiver (53) disposed so as to interpose the rolled conductor (23A) or the rectangular conductor (23B) between the first irradiator (51) and the first light receiver (53), and configured to receive the parallel light irradiated by the first irradiator (51); and
      a first detector (55) configured to detect the vertical distance based on the parallel light received by the first light receiver (53),

   wherein the second measurement portion (45) comprises

      a second irradiator (61) configured to irradiate parallel light in a vertical direction;
      a second light receiver (63) disposed so as to interpose the rolled conductor (23A) or the rectangular conductor (23B) between the second irradiator (61) and the second light receiver (63), and configured to receive the parallel light irradiated by the second irradiator (61); and
      a second detector (65) configured to detect the horizontal distance based on the parallel light received by the second light receiver (63).

4. The entry angle enlargement inhibiting device (33) according to claim 1, wherein the measurer (37) is configured to measure an apparent thickness of the rolled conductor (23A) or the rectangular conductor (23B) as viewed in a direction orthogonal to a traveling direction of the rolled conductor (23A) or the rectangular conductor (23B) and calculate the roll angle based on the apparent thickness.

**5.** The entry angle enlargement inhibiting device (33) according to claim 4, wherein the measurer (37) comprises

an irradiator (51, 61) configured to irradiate parallel light in a direction orthogonal to the traveling direction;
a light receiver (53, 63) disposed so as to interpose the rolled conductor (23A) or the rectangular conductor (23B) between the irradiator and the light receiver (53, 63) and configured to receive the parallel light irradiated by the irradiator; and
a detector (55, 65) configured to detect the apparent thickness based on the parallel light received by the light receiver.

**6.** A method of manufacturing an enameled wire that includes letting a rolled conductor (23A) or a rectangular conductor (23B) pass through a rectangular drawing die (31), the method comprising:

measuring the pitch angle, the yaw angle, and the roll angle of the rolled conductor (23A) or the rectangular conductor (23B) with respect to the rectangular drawing die (31); and
moving or rotating the rolled conductor (23A) or the rectangular conductor (23B) upstream of the rectangular drawing die (31) in a direction where the pitch angle, the yaw angle, and the roll angle measured decrease.

FIG. 1

FIG. 2

FIG. 3

FIG. 4

EP 4 635 643 A1

FIG. 5

FIG. 6

FIG. 7

FIG. 8

FIG. 9

Europäisches
Patentamt

European
Patent Office

Office européen
des brevets

## EUROPEAN SEARCH REPORT

**Application Number**

EP 25 16 2050

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2015 036149 A (SUMITOMO WIRING SYSTEMS) 23 February 2015 (2015-02-23) * paragraphs [0029] - [0031]; figures * | 1-6 | INV. B21C1/34 B21C51/00 G01B11/00 G01B11/24 G01B11/26 |
| A | DE 27 14 018 A1 (SCHUMAG GMBH) 5 October 1978 (1978-10-05) * page 9, last paragraph - page 12; figures * | 1-6 | |
| A | EP 2 133 885 B1 (FURUKAWA ELECTRIC CO LTD [JP]) 19 June 2013 (2013-06-19) * the whole document * | 1-6 | |

TECHNICAL FIELDS
SEARCHED (IPC)

B21C
G01B

The present search report has been drawn up for all claims

| Place of search | Date of completion of the search | Examiner |
|---|---|---|
| Munich | 14 August 2025 | Charvet, Pierre |

EPO FORM 1503 03.82 (P04C01)

## ANNEX TO THE EUROPEAN SEARCH REPORT
## ON EUROPEAN PATENT APPLICATION NO.

EP 25 16 2050

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2025

| Patent document cited in search report | | Publication date | Patent family member(s) | | Publication date |
|---|---|---|---|---|---|
| JP 2015036149 | A | 23-02-2015 | NONE | | |
| DE 2714018 | A1 | 05-10-1978 | BR | 7801334 A | 24-10-1978 |
| | | | DE | 2714018 A1 | 05-10-1978 |
| | | | ES | 465805 A1 | 16-09-1978 |
| | | | ES | 468485 A1 | 16-12-1978 |
| | | | FR | 2385460 A1 | 27-10-1978 |
| | | | IT | 1090944 B | 26-06-1985 |
| | | | JP | S53120663 A | 21-10-1978 |
| EP 2133885 | B1 | 19-06-2013 | CN | 101558459 A | 14-10-2009 |
| | | | EP | 2133885 A1 | 16-12-2009 |
| | | | JP | 5441686 B2 | 12-03-2014 |
| | | | JP | 5667278 B2 | 12-02-2015 |
| | | | JP | 2014063756 A | 10-04-2014 |
| | | | JP | WO2008126375 A1 | 22-07-2010 |
| | | | RU | 2009113246 A | 10-05-2011 |
| | | | US | 2010203231 A1 | 12-08-2010 |
| | | | WO | 2008126375 A1 | 23-10-2008 |

EPO FORM P0459

For more details about this annex : see Official Journal of the European Patent Office, No. 12/82

**EP 4 635 643 A1**

**REFERENCES CITED IN THE DESCRIPTION**

**Patent documents cited in the description**

- JP 6730930 B

- JP 2015036149 A